# EUROPÄISCHE PATENTSCHRIFT

(11) **EP 4 139 672 B1**
(45) Veröffentlichungstag und Bekanntmachung des Hinweises auf die Patenterteilung: **14.08.2024**
(21) Anmeldenummer: 22701324.0
(22) Anmeldetag: 12.01.2022
(51) Int. Cl.: G01N 30/60

(54) **RADIALFLUSSSÄULE ZUM DURCHLEITEN EINES FLÜSSIGEN PRODUKTS DURCH EIN ADSORBERMATERIAL**
RADIAL FLOW COLUMN FOR CONVEYING A LIQUID PRODUCT THROUGH AN ADSORBER MATERIAL
COLONNE À ÉCOULEMENT RADIAL POUR TRANSPORTER UN PRODUIT LIQUIDE À TRAVERS UN MATÉRIAU ADSORBANT

(30) Priorität: 02.02.2021 DE 102021102315
(43) Veröffentlichungstag der Anmeldung: 01.03.2023
(73) Patentinhaber: Albert Handtmann Armaturenfabrik GmbH & Co. KG, 88400 Biberach/Riss (DE)
(72) Erfinder: ZANG, Albert, 88326 Aulendorf (DE)
(74) Vertreter: Grünecker Patent- und Rechtsanwälte PartG mbB
(86) Internationale Anmeldenummer: PCT/EP2022/050530
(87) Internationale Veröffentlichungsnummer: WO 2022/167181

(56) Entgegenhaltungen:
- US-A- 4 676 898
- US-A1- 2011 233 153
- US-A1- 2018 333 670
- US-B1- 6 294 090

## Beschreibung

Die Erfindung betrifft eine Radialflusssäule.

Gattungsgemäße Radialflusssäulen werden beispielsweise zur Bierstabilisierung durch Polyphenoladsorption, bei der Herstellung von Milch zur Proteinadsorption und zur Chromatografie in der Biotechnologie eingesetzt. Das jeweilige Produkt wird dabei im Wesentlichen in radialer Richtung durch ein Adsorbermaterial geleitet, das in einen von einem inneren und einem äußeren Sieb begrenzten Zwischenraum eingefüllt wird. Hierbei ist je nach Anwendungsfall eine Fließrichtung von außen nach innen oder umgekehrt möglich.

Das innere und äußere Sieb weisen jeweils stirnseitig Fassungsringe auf, die ein dazwischen im Wesentlichen rohrförmig verlaufendes Siebgewebe halten. Die Fassungsringe werden stirnseitig mit dem Gehäuse der Radialflusssäule verschweißt, um die Siebe stirnseitig abzudichten, so dass das Produkt nur durch das Siebgewebe fließen kann. Die Fassungsringe sitzen dann zum einen auf dem Gehäuseboden auf und sind zum anderen an einem Gehäusedeckel befestigt, der von wenigstens einem Deckelflansch gebildet wird.

Um den Deckelflansch von oben mit ausreichender Dichtwirkung unter Spannung festschrauben zu können, müssen die Längsabmessungen der Siebe exakt an das Gehäuse angepasst werden. Hierfür sind das innere und äußere Sieb auch relativ zueinander mit vergleichsweise geringer Fertigungstoleranz in Längsrichtung herzustellen. Problematisch ist neben dem hohen Fertigungsaufwand auch der Umstand, dass sich die Siebe je nach Prozesstemperatur in Längsrichtung ausdehnen und dadurch beschädigt werden können bzw. im Umkehrschluss der Bereich möglicher Prozesstemperaturen in unerwünschtem Maße eingeschränkt ist. Als nachteilig hat sich zudem erwiesen, dass die nicht lösbare Schweißverbindung der Siebe mit dem Deckel keine Sichtkontrolle beispielsweise hinsichtlich Verschmutzungen des Siebgewebes zulässt. Zudem wurde festgestellt, dass die Effektivität und/oder Qualität des Adsorptionsprozesses durch eine eingangsseitig ungleichmäßige Verteilung des Produkts über den Siebumfang in unerwünschter Weise beeinträchtigt wird.

Aus der US 2011/233153 A1 ist bekannt: eine Radialflusssäule zum Durchleiten eines flüssigen Produkts durch ein Adsorbermaterial, mit einem Gehäuse und, darin angeordnet, einem inneren Sieb und einem äußeren Sieb, die jeweils eine Längsachse des Gehäuses umschließen und zwischen denen ein radialer Zwischenraum zur Aufnahme des Adsorbermaterials ausgebildet ist, wobei stirnseitige Endbereiche des inneren und äußeren Siebs zum Gehäuse hin mittels Dichtungsringen abgedichtet sind, um das Produkt radial durch die Siebe und das Adsorbermaterial zu leiten. Die Dichtungsringe sind als O-Ringe ausgebildet, die zum einen das innere Sieb in axialer Richtung und zum anderen das äußere Sieb in radialer Richtung abdichten.

Es besteht somit der Bedarf für eine Radialflusssäule, mit der sich wenigstens eines der oben genannten Probleme beseitigen oder zumindest abmildern lässt.

Die gestellte Aufgabe wird mit einer Radialflusssäule gemäß Anspruch 1 gelöst. Demnach dient dieses zum Durchleiten eines flüssigen Produkts durch ein Adsorbermaterial und insbesondere zur Radialfluss-Chromatografie. Die Radialflusssäule umfasst ein Gehäuse und, darin angeordnet, ein inneres Sieb und ein äußeres Sieb, die jeweils eine Längsachse der Radialflusssäule bzw. des Gehäuses umschließen. Zwischen dem inneren und dem äußeren Sieb ist ein radialer Zwischenraum zur Aufnahme des Adsorbermaterials ausgebildet. Ferner sind stirnseitige Endbereiche des inneren und äußeren Siebs zum Gehäuse hin abgedichtet, um das Produkt radial durch die Siebe und das Adsorbermaterial zu leiten.

Außerdem umfasst die Radialflusssäule Dichtungsringe zur radialen Abdichtung der stirnseitigen Endbereiche, wobei die Dichtungsringe und damit jeweils zusammenwirkende Dichtflächen ein axiales Spiel der Siebe im Gehäuse zulassen.

Das axiale Spiel ermöglicht zum einen eine Kompensation von Fertigungstoleranzen des inneren und äußeren Siebs in Längsrichtung sowohl relativ zueinander als auch bezüglich des Gehäuses. Zum anderen ermöglicht das axiale Spiel eine Kompensation von Längenänderungen der Siebe aufgrund von Temperaturschwankungen, beispielsweise während des Produktionsbetriebs, einer Dampfsterilisation oder dergleichen. In beiden Fällen lassen sich schädliche Materialspannungen aufgrund unterschiedlicher Längsabmessungen der eingebauten Siebe vermeiden, und damit auch spannungsbedingte Beschädigungen des inneren und äußeren Siebs.

Die Radialflusssäule hat vorzugsweise einen im Wesentlichen kreisförmigen Querschnitt. Die Längsachse ist insbesondere eine Mittelachse der Radialflusssäule.

Die Begriffe "axial" und "radial" beziehen sich stets auf die Längsachse der Radialflusssäule.

Die axiale Richtung ist gleichbedeutend mit der Längsrichtung und verläuft im betriebsbereiten Zustand der Radialflusssäule vorzugsweise vertikal. Darauf beziehen sich auch die Angaben "oben" und "unten".

Vorzugsweise weisen das innere und äußere Sieb jeweils einen oberen und einen unteren Fassungsring auf, an denen die Dichtflächen radial nach außen und/oder innen weisend ausgebildet sind. Die Dichtflächen können zudem parallel zur Längsachse verlaufen. Damit lässt sich das axiale Spiel auf konstruktiv einfache Weise bereitstellen. Zudem wird ein Einsetzen der Siebe in das Gehäuse und/oder ein Aufsetzen des Gehäusedeckels auf die Siebe in axialer Richtung begünstigt.

Vorzugsweise umfasst die Radialflusssäule ferner einen in das innere Sieb ragenden zentralen Verdrängungskörper, an dessen oberen Ende ein radial über das innere Sieb überstehender Befestigungsflansch mit Dichtungssitzen für die Dichtungsringe zur Abdichtung gegenüber dem inneren und äußeren Sieb ausgebildet ist. Dies ermöglicht eine einfache gemeinsame Abdichtung der Siebe nach oben hin.

Vorzugsweise ist der obere Fassungsring des inneren Siebs in axialem Abstand zum Befestigungsflansch angeordnet. Dies ermöglicht ein axiales Spiel innerhalb des axialen Abstands.

Vorzugsweise ist der Verdrängungskörper hängend an einem das Gehäuse nach oben abschließenden Deckelflansch befestigt. Dies ermöglicht eine spannungsarme Befestigung des Verdrängungskörpers und der Siebe mittels Schraubverbindungen.

Vorzugsweise sind am Verdrängungskörper stirnseitig nach oben hin ausgebildete Gewindesacklöcher von außen mit am Deckelflansch ausgebildeten Durchgangslöchern tragend verschraubt. Dies ermöglicht eine Befestigung des Verdrängungskörpers ausschließlich von außen her, wodurch aus hygienischer Sicht problematische Verbindungselemente, wie beispielsweise Hutmuttern, auf der dem Produkt zugewandten Seite des Verdrängungskörpers vermieden werden können.

Vorzugsweise ist zwischen dem Verdrängungskörper und dem Deckelflansch ein axialer Spalt ausgebildet zum Durchleiten des Produkts zwischen wenigstens einem zentral am Deckelflansch angeordneten Anschluss für eine externe Produktleitung und einem zwischen dem äußeren Sieb und dem Gehäuse ausgebildeten äußeren radialen Zwischenraum für das Produkt. Dies ermöglicht eine radiale Produktströmung zwischen dem Anschluss für die externe Produktleitung und dem äußeren radialen Zwischenraum für das Produkt. Hierbei ist sowohl ein Zufluss des Produkts aus der externen Produktleitung möglich als auch ein Abfluss des Produkts dorthin. Dies ermöglicht eine einfache und radialsymmetrische Produktzuleitung oder Produktausleitung über einen einzigen zentralen Anschluss.

Vorzugsweise mündet der axiale Spalt dann im Wesentlichen vollumfänglich in den äußeren radialen Zwischenraum. Dadurch wird eine umfänglich gleichmäßige Verteilung des Produkts insbesondere bei einem Produktzufluss durch den axialen Spalt begünstigt. Eine umfänglich gleichmäßige Produktverteilung optimiert die Adsorptionswirkung des Adsorbermaterials.

Vorzugsweise bestehen das Gehäuse und Siebe aus Edelstahl, wobei das zugelassene axiale Spiel größer ist als eine Längenausdehnung des Edelstahls bei einer Temperaturdifferenz von 100 °C und insbesondere von 150 °C.

Der Edelstahl ist beispielsweise ein Edelstahl mit der Werkstoffnummer 1.4404 (316L). Denkbar sind ebenso Edelstähle, die hinsichtlich ihrer mechanischen Eigenschaften und/oder Korrosionsfestigkeit wenigstens gleichwertige Eigenschaften aufweisen. Somit eignet sich die Radialflusssäule auch für vergleichsweise große Temperaturunterschiede, die beispielsweise bei einer Dampfsterilisation, einem CIP-Prozess oder dergleichen auftreten können.

Vorzugsweise sind das innere und äußere Sieb jeweils an ihren beiden stirnseitigen Endbereichen lösbar mit dem Gehäuse verbunden. Dies vereinfacht sowohl eine Inspektion der Siebe und ermöglicht zudem deren Austausch, beispielsweise im Falle geänderter Anforderungen hinsichtlich der Maschenweite und/oder zu Reinigungszwecken. Unter einer lösbaren Verbindung ist zu verstehen, dass die Dichtungsringe von den korrespondierenden Dichtflächen und/oder Dichtungssitzen abgelöst werden können, ohne die Dichtflächen und/oder Dichtungssitze strukturell zu verändern und dass diese gegebenenfalls nach Reinigung wiederverwendet werden können.

Die Dichtungsringe der erfindungsgemäßen Radialflusssäule umfassen jeweils einen Befestigungsabschnitt zum axialen Formschluss mit zugehörigen Dichtungssitzen und einen Dichtabschnitt zur radialen Abdichtung korrespondierender Dichtflächen. Damit ist eine in Längsrichtung stabile Position der Dichtungsringe beispielsweise bei Temperaturschwankungen und/oder bei der Montage gegeben.

Vorzugsweise weisen die Dichtungsringe dann ein im Wesentlichen L-förmiges und/oder T-förmiges Profil auf. Das heißt, dass dann wenigstens ein zugehöriger Profilschenkel den axialen Formschluss mit den Dichtungssitzen herstellt und wenigstens ein zugehöriger Profilschenkel als Dichtabschnitt ausgebildet ist.

Vorzugsweise bestehen die Dichtungsringe aus EPDM. Dies ermöglicht eine dauerhaft zuverlässige Dichtungswirkung sowohl hinsichtlich des erforderlichen Temperaturbereichs als auch der geforderten Dauerelastizität der Dichtungsringe.

Vorzugsweise sind die Dichtungsringe, zugehörigen Dichtungssitze und korrespondiere Dichtflächen insgesamt flüssigkeitsdicht bis zu einem eingangsseitigen Prozessdruck von wenigstens 10 bar. Damit lässt sich beispielsweise eine aus hygienischer Sicht problematische Hinterwanderung der Dichtungsringe mit Produkt und/oder Reinigungsflüssigkeit sowohl im Produktionsbetrieb als auch bei Reinigungsprozessen, wie beispielsweise CIP-Prozessen, vermeiden. Vorzugsweise hat der Zwischenraum zur Aufnahme des Adsorbermaterials ein Volumen von 0,02 bis 2 m³, insbesondere von 0,1 bis 0,5 m³.

Es zeigen
- Figur 1: einen Längsschnitt durch die Radialflusssäule und deren Ansicht von oben;
- Figur 2: einen vergrößerten Ausschnitt A aus der Figur 1;
- Figur 3: einen vergrößerten Ausschnitt B aus der Figur 1; und
- Figur 4: einen alternativen Längsschnitt durch die Radialflusssäule und deren Ansicht von unten.

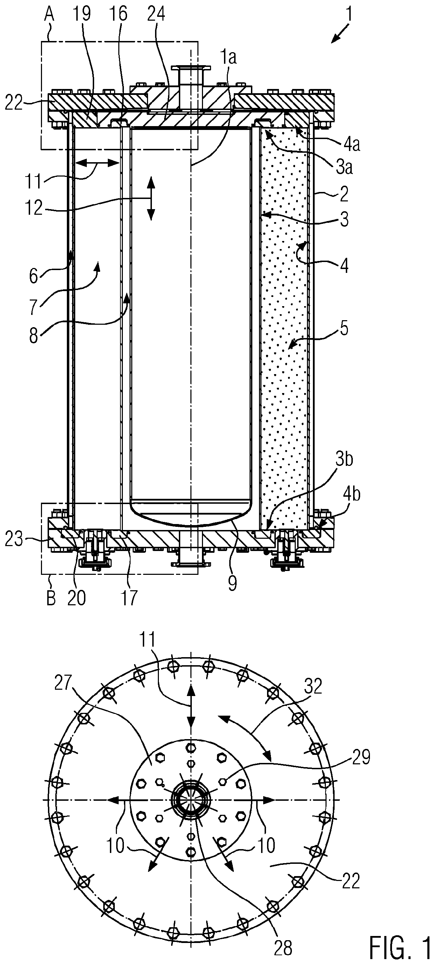

Wie die Figur 1 erkennen lässt, umfasst die Radialflusssäule 1 ein im Wesentlichen zylindrisches Gehäuse 2, in dem ein im Wesentlichen zylindrisches inneres Sieb 3 und ein im Wesentlichen zylindrisches äußeres Sieb 4 konzentrisch um eine Längsachse 1a der Radialflusssäule 1 / des Gehäuses 2 angeordnet sind. Zwischen dem inneren und äußeren Sieb 3, 4 wird in prinzipiell bekannter Weise ein vorzugsweise gelartiges Adsorbermaterial 5 eingefüllt.

Zwischen dem äußeren Sieb 4 und dem Gehäuse 2 ist ein äußerer radialer Zwischenraum 6 ausgebildet, zwischen dem inneren Sieb 3 und dem äußeren Sieb 4 ein mittlerer radialer Zwischenraum 7. Zudem gibt es einen inneren radialen Zwischenraum 8 zwischen dem inneren Sieb 3 und einem zentral im Gehäuse 2 angeordneten und die Längsachse 1a ebenfalls umgebenden Verdrängungskörper 9, der den Produktfluss in bekannter Weise weitgehend auf einen äußeren Teilbereich der Radialflusssäule 1 begrenzt.

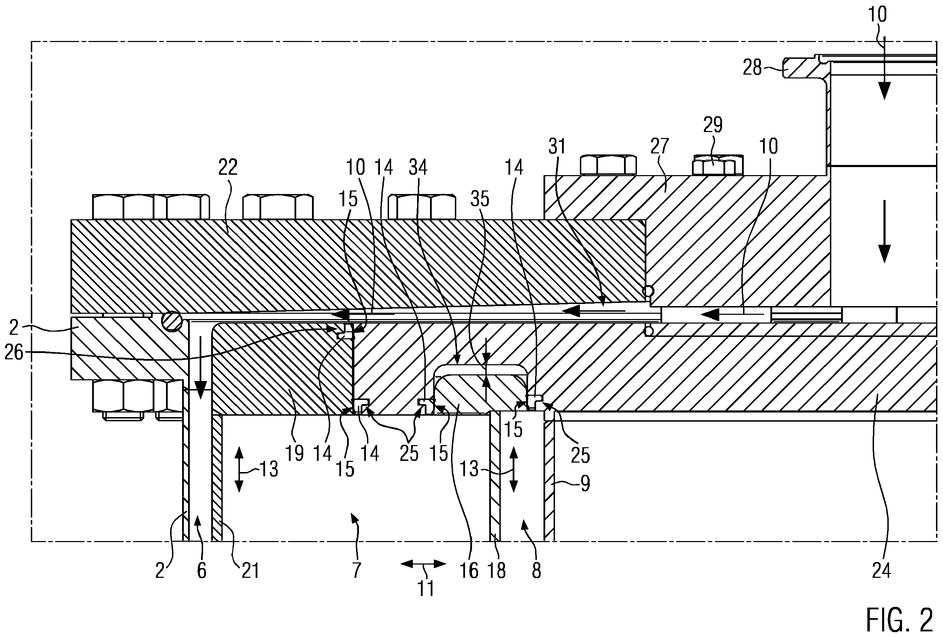

Die radialen Zwischenräume 6, 7, 8 werden von einem zu behandelnden Produkt 10 (Figur 2) nacheinander entweder von außen nach innen oder von innen nach außen durchflossen, um das Produkt 10 in radialer Richtung 11 durch das Adsorbermaterial 5 zu leiten und dadurch zu behandeln. Zu diesem Zweck liegt das Produkt 10 eingangsseitig beispielsweise unter einem Prozessdruck von bis zu 10 bar an.

Die Erfindung zeichnet sich im Wesentlich dadurch aus, dass das innere Sieb 3 und das äußere Sieb 4 derart im Gehäuse 2 befestigt sind, dass ein in axialer Richtung 12 definiertes axiales Spiel 13 der Siebe 3, 4 bezüglich des Gehäuses 2 möglich ist. Das axiale Spiel 13 ist zur Verdeutlichung in der Figur 2 schematisch angedeutet.

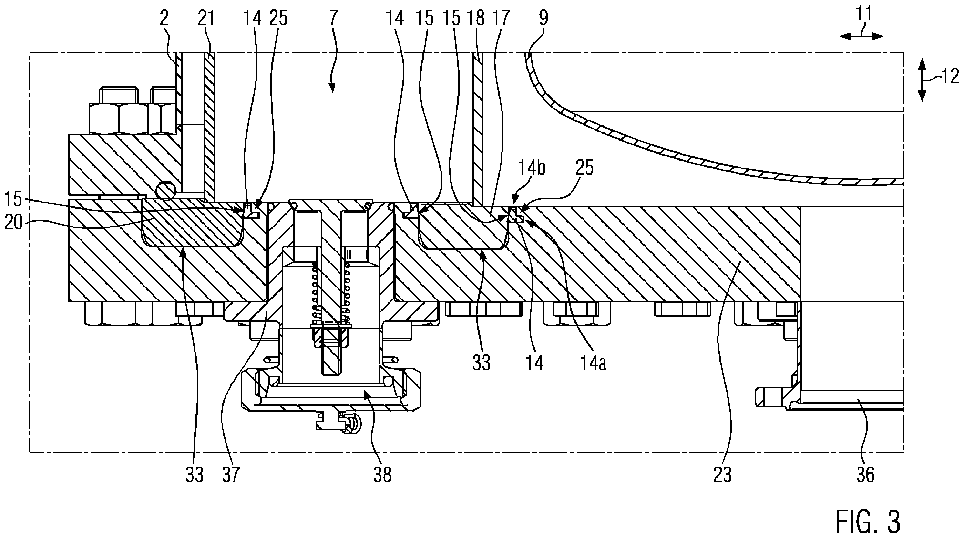

Das axiale Spiel 13 wird durch Dichtungsringe 14 ermöglicht, die stirnseitige Endbereiche 3a, 3b des inneren Siebs 3 und stirnseitige Endbereiche 4a, 4b des äußeren Siebs 4 in radialer Richtung 11 jeweils gegenüber zugeordneten Dichtflächen 15 flüssigkeitsdicht abdichten, siehe die Figuren 2 und 3 (Teilbereiche A und B der Fig. 1).

Das innere Sieb 3 besteht im prinzipiell bekannter Weise aus einem ersten (oberen) Fassungsring 16, einem zweiten (unteren) Fassungsring 17 und einem davon eingefassten Siebgewebe 18. Entsprechend weist das äußere Sieb 4 einen ersten (oberen) Fassungsring 19, einen zweiten (unteren) Fassungsring 20 und ein davon eingefasstes Siebgewebe 21 auf.

Das Gehäuse 2 umfasst zum stirnseitigen Abschluss nach oben hin einen Deckelflansch 22 und zum stirnseitigen Abschluss nach unten hin einen Bodenflansch 23.

Der zentrale Verdrängungskörper 9 umfasst zu seiner hängenden Befestigung am Deckelflansch 22 einen stirnseitigen Befestigungsflansch 24. Im Befestigungsflansch 24 sind Dichtungssitze 25 für jeweils zugeordnete Dichtungsringe 14 ausgebildet. Ergänzend kann zudem ein nach innen weisender Dichtungssitz 26 am ersten (oberen) Fassungsring 19 des äußeren Siebs 4 ausgebildet sein.

Wie der Übersichtlichkeit halber nur in der Figur 3 bezeichnet ist, umfassen die Dichtungsringe 14 im Wesentlichen in radialer Richtung 11 verlaufende Verankerungsabschnitte 14a, um einen axialen Formschluss mit dem jeweiligen Dichtungssitz 25, 26 herzustellen, und im Wesentlichen in axialer Richtung 12 verlaufende Dichtabschnitte 14b, die die erforderliche radiale Dichtwirkung mit den zugeordneten Dichtflächen 15 herstellen.

Die Dichtungsringe 14 weisen ein im Wesentlichen L-förmiges Querschnittsprofil auf. Denkbar wären auch T-förmige Profile, bei denen der mittlere Schenkel dann als Verankerungsabschnitt 14a ausgebildet wäre, oder funktional entsprechende Profile / Dichtungsquerschnitte.

Der Deckelflansch 22 umfasst vorzugsweise ein dicht damit verschraubtes Mittelstück 27 mit einem zentralen Anschluss 28 für eine obere externe Produktleitung (nicht dargestellt). Der Anschluss 28 kann, wie dargestellt, als eingeschweißter Stutzen ausgebildet sein.

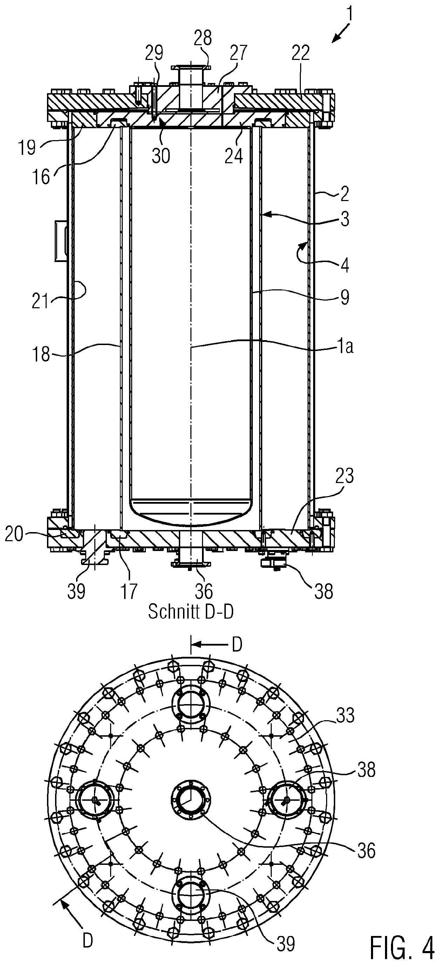

Wie die Figur 4 erkennen lässt, ist der Befestigungsflansch 24 des Verdrängungskörpers 9 vorzugsweise hängend am Deckelflansch 22 von oben her befestigt. Zu diesem Zweck ist der Deckelflansch 22 insbesondere durch am zentralen Mittelstück 27 vorhandene Durchgangsbohrungen mittels Schrauben 29 mit im Befestigungsflansch 24 ausgebildeten Gewindesacklöchern 30 verschraubt. Die zugehörigen Verbindungselemente sind dann ausschließlich von außen her zugänglich, sodass aus hygienischer Sicht bedenkliche Verbindungselemente, wie Hutmuttern oder dergleichen, an den produktberührten Oberflächen des Deckelflansches 22 und des Verdrängungskörpers 9 entbehrlich sind.

Wie die Figur 2 ferner erkennen lässt, ist zwischen dem Deckelflansch 22 und dem Befestigungsflansch 24 sowie dem oberen Fassungsring 19 des äußeren Siebs 4 ein axialer Spalt 31 (mit in axialer Richtung 12 definierter Spaltweite) ausgebildet, durch den das Produkt 10 in im Wesentlichen radialer Richtung 11 zufließen oder abfließen kann. Der axiale Spalt 31 fungiert als Produktkanal zwischen dem zentralen Anschluss 28 und dem äußeren radialen Zwischenraum 6.

Der axiale Spalt 31 ist in radialer Richtung 11 und in umfänglicher Richtung 32 lediglich von den Schrauben 29 durchdrungen, so dass das Produkt 10 zwischen dem Anschluss 28 und dem äu-βeren radialen Zwischenraum 6 umfänglich gleichmäßig verteilt in radialer Richtung 11 fließen kann. Dies ist in der Draufsicht der Fig. 1 (unten) schematisch angedeutet.

Insbesondere mündet der axiale Spalt 31 vollumfänglich in den äußeren radialen Zwischenraum 6, um eine in umfänglicher Richtung 32 möglichst gleichmäßige Verteilung des Produkts 10 zu ermöglichen (falls das Adsorbermaterial 5, wie dargestellt, von außen nach innen durchströmt) wird. In den Figuren 1 und 2 ist die Produktströmung durch Pfeile schematisch angedeutet. Prinzipiell ist jedoch auch die umgekehrte Strömungsrichtung denkbar.

Ein vollumfänglich durchgängiger axialer Spalt 31 verbessert insbesondere die eingangsseitige Verteilung des Produkts 10 auf das Adsorbermaterial 5 gegenüber herkömmlichen Verteilungssystemen für das Produkt 10 mit sternförmig nach außen verlaufenden Rohren.

Im Bodenflansch 23 sind ringförmige Aussparungen 33 zur Aufnahme der unteren Fassungsringe 17, 20 des inneren und äußeren Siebs 3, 4 ausgebildet. Die zugehörigen Dichtungssitze 25 sind dann vorzugsweise in den seitlichen Flanken der Aussparungen 33 ausgebildet.

Für den oberen Fassungsring 16 des inneren Siebs 3 ist eine entsprechende ringförmige Aussparung 34 im Befestigungsflansch 24 ausgebildet. Dichtungssitze 25 sind dann in den seitlichen Flanken der Aussparung 34 ausgebildet.

Für das äußere Sieb 4 ist vorzugsweise ein Dichtungssitz 25 am Außenumfang des Befestigungsflansches 24 und ein Dichtungssitz 26 am Innenumfang des oberen Fassungsrings 19 vorhanden.

Zwischen dem oberen Fassungsring 16 des inneren Siebs 3 und der ringförmigen Aussparung 34 im Befestigungsflansch 24 ist ein axialer Abstand 35 vorgesehen, der das axiale Spiel 13 beispielsweise zur Kompensation von Herstellungstoleranzen und/oder temperaturbedingten Längenänderungen des inneren Siebs 3 ermöglicht. Für den oberen Fassungsring 19 des äußeren Siebs 4 wird ein entsprechender axialer Abstand durch den axialen Spalt 31 bereitgestellt.

Der Vollständigkeit halber dargestellt sind ein am Bodenflansch 23 zentral ausgebildeter Anschluss 36 für eine untere externe Produktleitung (nicht dargestellt), sowie Anschlüsse 37, die wahlweise mit Ventilen 38 oder Blindstopfen 39 bestückt werden können, um Adsorbermaterial 5 zuzuführen oder abzuführen. Diese Bestandteile der Radialflusssäule 1 sind prinzipiell bekannt, so dass auf deren Anordnung und Funktion nicht im Detail eingegangen wird.

Die Dichtungsringe 14 bestehen vorzugsweise aus EPDM, um eine geforderte Dauerelastizität sowie thermische und chemische Beständigkeit der Abdichtung zu erzielen.

Tragende Bestandteile des Gehäuses 2 sowie das innere Sieb 3, das äußere Sieb 4 und der zentrale Verdrängungskörper 9 sind vorzugsweise aus Edelstahl hergestellt, beispielsweise aus solchem der Werkstoffgruppe 1.4404.

Das Siebgewebe 18, 21 haben beispielsweise eine Maschenweite von 20 bis 80 µm. Die Maschenweite richtet sich in erster Linie nach der Partikelgröße des Adsorbermaterials 5.

Das axiale Spiel 13 wird vorzugsweise so bemessen, dass eine Längenausdehnung des inneren und äußeren Siebs 3, 4 bei einem Temperaturunterschied von wenigstens 100 °C im Wesentlichen spannungsfrei kompensiert werden kann. Damit lassen sich relative Längenänderungen der Siebe 3, 4 bezüglich des Gehäuses 2 kompensieren, wenn beispielsweise im Bereich des inneren Siebs 3 bei einer Sterilisierung und/oder Reinigung eine deutlich höhere Temperatur herrscht als im Außenbereich des Gehäuses 2. Zudem ist die Montage der Radialflusssäule 1 bezüglich der Herstellungstoleranzen der Siebe 3, 4 in axialer Richtung 12 weitgehend unkritisch.

Mit den Dichtungsringen 14 können beispielsweise Prozessdrücke von bis zu 10 bar dauerhaft toleriert werden. Dies ist beispielsweise erforderlich, um Durchflussraten des Produkts 10 von etwa 10 bis 25 m³ pro Stunde und insbesondere von 15 bis 22 m³ pro Stunde zu ermöglichen. Hierfür hat der mittlere radiale Zwischenraum 7 vorzugsweise ein Fassungsvermögen von 0,02 bis 2 m³ und insbesondere von 0,1 bis 0,5 m³. Es kann also ein entsprechendes Volumen an Adsorbermaterial 5 aufgenommen werden.

Die beschriebene Radialflusssäule 1 ermöglicht zudem einen einfachen Zugang zum inneren und/oder äußeren Sieb 3, 4 für Instandhaltungszwecke. Beispielsweise kann überprüft werden, ob wenigstens eines der Siebe 3, 4 unzulässig verschmutzt und/oder beschädigt ist. Hierzu können der Deckelflansch 22 und der Befestigungsflansch 24 nach Lösen ihrer Verschraubung gemeinsam in axialer Richtung 12 vom Gehäuse 2 und den Sieben 3, 4 abgehoben werden, um letztere zu inspizieren und/oder auszuwechseln. Zu diesem Zweck sitzen die Siebe 3, 4 auch mit ihren unteren Fassungsringen 17, 20 lösbar in/auf dem Bodenflansch 23 und werden demgegenüber im eingesetzten Zustand von den Dichtungsringen 14 zuverlässig abgedichtet.

Die Dichtungsringe 14 reduzieren somit den Aufwand bei der Herstellung und Montage der Radialflusssäule 1 und ermöglichen zudem höhere Prozesstemperaturen bei der Produktion und der Reinigung / Sterilisierung sowie eine vereinfachte Instandhaltung der Radialflusssäule 1.

## Patentansprüche

1. Radialflusssäule (1) zum Durchleiten eines flüssigen Produkts (10) durch ein Adsorbermaterial (5), insbesondere zur Radialfluss-Chromatografie, mit einem Gehäuse (2) und, darin angeordnet, einem inneren Sieb (3) und einem äußeren Sieb (4), die jeweils eine Längsachse (1a) des Gehäuses (2) umschließen und zwischen denen ein radialer Zwischenraum (7) zur Aufnahme des Adsorbermaterials (5) ausgebildet ist, wobei stirnseitige Endbereiche (3a, 3b, 4a, 4b) des inneren und äußeren Siebs zum Gehäuse hin abgedichtet sind, um das Produkt (10) radial durch die Siebe (3, 4) und das Adsorbermaterial (5) zu leiten, und mit Dichtungsringen (14) zur radialen Abdichtung der stirnseitigen Endbereiche, **dadurch gekennzeichnet, dass** das innere Sieb (3) und das äußere Sieb (4) derart im Gehäuse (2) befestigt sind und die Dichtungsringe (14) einen Befestigungsabschnitt (14a) zum axialen Formschluss mit zugehörigen Dichtungssitzen (25, 26) und einen Dichtabschnitt (14b) zur radialen Abdichtung korrespondierender Dichtflächen (15) so umfassen, dass ein in axialer Richtung (12) definiertes axiales Spiel (13) der Siebe (3, 4) bezüglich des Gehäuses (2) möglich ist.

2. Radialflusssäule nach Anspruch 1, wobei das innere und äußere Sieb (3, 4) jeweils einen oberen und einen unteren Fassungsring (16, 17, 19, 20) aufweisen, an denen die Dichtflächen (15) radial nach außen und/oder innen weisend ausgebildet sind.

3. Radialflusssäule nach Anspruch 1 oder 2, ferner mit einem in das innere Sieb (3) ragenden zentralen Verdrängungskörper (9), an dessen oberem Ende ein radial über das innere Sieb (3) überstehender Befestigungsflansch (24) mit Dichtungssitzen (25) für die Dichtungsringe (14) zur Abdichtung gegenüber dem inneren und äußeren Sieb (3, 4) ausgebildet ist.

4. Radialflusssäule nach Anspruch 2 und 3, wobei der obere Fassungsring (16) des inneren Siebs (3) in axialem Abstand (35) zum Befestigungsflansch (24) angeordnet ist.

5. Radialflusssäule nach Anspruch 3 oder 4, wobei der Verdrängungskörper (9) hängend an einem das Gehäuse (2) nach oben abschließenden Deckelflansch (22) befestigt ist.

6. Radialflusssäule nach Anspruch 5, wobei am Verdrängungskörper (9) stirnseitig ausgebildete Gewindesacklöcher (30) von außen mit dem Deckelflansch (22) tragend verschraubt sind.

7. Radialflusssäule nach Anspruch 5 oder 6, wobei zwischen dem Verdrängungskörper (9) und dem Deckelflansch (22) ein axialer Spalt (31) ausgebildet ist zum Durchleiten des Produkts (10) zwischen wenigstens einem zentral am Deckelflansch angeordneten Anschluss (28) für eine externe Produktleitung und einem zwischen dem äußeren Sieb (4) und dem Gehäuse (2) ausgebildeten äußeren radialen Zwischenraum (6) für das Produkt.

8. Radialflusssäule nach Anspruch 7, wobei der axiale Spalt (31) im Wesentlichen vollumfänglich in den äußeren radialen Zwischenraum (6) mündet.

9. Radialflusssäule nach wenigstens einem der vorigen Ansprüche, wobei das Gehäuse (2) und die Siebe (3, 4) aus Edelstahl bestehen und das zugelassene axiale Spiel (13) größer ist als eine Längenausdehnung des Edelstahls bei einer Temperaturdifferenz von 100 °C, insbesondere 150 °C.

10. Radialflusssäule nach wenigstens einem der vorigen Ansprüche, wobei das innere und äu-βere Sieb (3, 4) jeweils an ihren beiden stirnseitigen Endbereichen (3a, 3b, 4a, 4b) lösbar mit dem Gehäuse (2) verbunden sind.

11. Radialflusssäule nach wenigstens einem der vorigen Ansprüche, wobei die Dichtungsringe (14) ein im Wesentlichen L-förmiges und/oder T-förmiges Querschnittsprofil aufweisen.

12. Radialflusssäule nach wenigstens einem der vorigen Ansprüche, wobei die Dichtungsringe (14) aus EPDM bestehen.

13. Radialflusssäule nach wenigstens einem der vorigen Ansprüche, wobei die Dichtungsringe (14), zugehörige Dichtungssitze (25, 26) und korrespondierende Dichtflächen (15) flüssigkeitsdicht sind bis zu einem eingangsseitigen Prozessdruck von wenigstens 10 bar.

14. Radialflusssäule nach wenigstens einem der vorigen Ansprüche, wobei der Zwischenraum (7) zur Aufnahme des Adsorbermaterials (5) ein Volumen von 0,02 bis 2 m³ hat, insbesondere von 0,1 bis 0,5 m³.

## Claims

1. Radial flow column (1) for passing a liquid product (10) through an adsorber material (5), in particular for radial flow chromatography, having a housing (2) and, arranged therein, an inner sieve (3) and an outer sieve (4), which each enclose a longitudinal axis (1a) of the housing (2) and between which a radial intermediate space (7) is formed for receiving the adsorber material (5), wherein end regions (3a, 3b, 4a, 4b) of the inner and outer sieves are sealed towards the housing in order to convey the product (10) radially through the sieves (3, 4) and the adsorber material (5), and with sealing rings (14) for radially sealing the end face end regions, **characterized in that** the inner sieve (3) and the outer sieve (4) are fastened in the housing (2) in such a way and the sealing rings (14) have a fastening section (14a) for axial positive locking with associated sealing seats (25, 26) and a sealing section (14b) for radial sealing of corresponding sealing surfaces (15) in such a way that an axial play (13) of the sieves (3, 4) defined in the axial direction (12) with respect to the housing (2) is possible.

2. Radial flow column according to claim 1, wherein the inner and outer sieve (3, 4) each have an upper and a lower socket ring (16, 17, 19, 20), on which the sealing surfaces (15) are designed to point radially outwards and/or inwards.

3. Radial flow column according to claim 1 or 2, furthermore with a central displacement body (9) projecting into the inner sieve (3), at the upper end of which a fastening flange (24) projecting radially beyond the inner sieve (3) is formed with sealing seats (25) for the sealing rings (14) for sealing against the inner and outer sieve (3, 4).

4. Radial flow column according to claims 2 and 3, wherein the upper socket ring (16) of the inner sieve (3) is arranged at an axial distance (35) from the fastening flange (24).

5. Radial flow column according to claim 3 or 4, wherein the displacement body (9) is suspended from a cover flange (22) closing the housing (2) at the top.

6. Radial flow column according to claim 5, wherein threaded blind holes (30) formed on the end face of the displacement body (9) are screwed from the outside to the cover flange (22) in a load-bearing manner.

7. Radial flow column according to claim 5 or 6, wherein an axial gap (31) is formed between the displacement body (9) and the cover flange (22) for passing the product (10) between at least one connection (28) arranged centrally on the cover flange for an external product line and an outer radial intermediate space (6) for the product formed between the outer sieve (4) and the housing (2).

8. Radial flow column according to claim 7, wherein the axial gap (31) opens substantially completely into the outer radial intermediate space (6).

9. Radial flow column according to at least one of the preceding claims, wherein the housing (2) and the sieves (3, 4) are made of stainless steel and the permitted axial play (13) is greater than a linear expansion of the stainless steel at a temperature difference of 100 °C, in particular 150 °C.

10. Radial flow column according to at least one of the preceding claims, wherein the inner and outer sieve (3, 4) are each detachably connected to the housing (2) at their two end face end regions (3a, 3b, 4a, 4b).

11. Radial flow column according to at least one of the preceding claims, wherein the sealing rings (14) have a substantially L-shaped and/or T-shaped cross-sectional profile.

12. Radial flow column according to at least one of the preceding claims, wherein the sealing rings (14) are made of EPDM.

13. Radial flow column according to at least one of the preceding claims, wherein the sealing rings (14), associated sealing seats (25, 26) and corresponding sealing surfaces (15) are liquid-tight up to an inlet-side process pressure of at least 10 bar.

14. Radial flow column according to at least one of the preceding claims, wherein the intermediate space (7) for accommodating the adsorber material (5) has a volume of 0.02 to 2 m³, in particular of 0.1 to 0.5 m³.

## Revendications

1. Colonne à écoulement radial (1) pour faire passer un produit liquide (10) à travers un matériau adsorbant (5), en particulier pour une chromatographie à écoulement radial, comprenant un logement (2) et, agencés à l'intérieur de celui-ci, un tamis intérieur (3) et un tamis extérieur (4), qui entourent chacun un axe longitudinal (1a) du logement (2) et entre lesquels est formé un espace intermédiaire radial (7) pour recevoir le matériau adsorbant (5), dans laquelle des régions d'extrémité frontales (3a, 3b, 4a, 4b) des tamis intérieur et extérieur sont scellées au logement afin de guider le produit (10) radialement à travers les tamis (3, 4) et le matériau adsorbant (5), et comprend des bagues d'étanchéité (14) pour sceller radialement les régions d'extrémité frontales, **caractérisée en ce que** le tamis intérieur (3) et le tamis extérieur (4) sont fixés dans le logement (2) et les bagues d'étanchéité (14) présentent une partie de fixation (14a) pour une liaison positive axiale avec des sièges d'étanchéité associés (25, 26) et une partie d'étanchéité (14b) pour l'étanchéité radiale des surfaces d'étanchéité correspondantes (15) de telle sorte qu'un jeu axial (13) des tamis (3, 4) par rapport au boîtier (2) défini dans la direction axiale (12) est possible.

2. Colonne à écoulement radial selon la revendication 1, dans laquelle les tamis intérieur et extérieur (3, 4) présentent chacun une bague de douille supérieure et une bague de douille inférieure (16, 17, 19, 20), sur lesquelles les surfaces d'étanchéité (15) sont formées de manière à être dirigées radialement vers l'extérieur et/ou vers l'intérieur.

3. Colonne à écoulement radial selon la revendication 1 ou 2, comprenant en outre un corps de refoulement central (9) faisant saillie dans le tamis intérieur (3), à l'extrémité supérieure duquel est formée une bride de fixation (24) faisant saillie radialement à partir du tamis intérieur (3) avec des sièges d'étanchéité (25) pour les bagues d'étanchéité (14) afin de sceller par rapport aux tamis intérieur et extérieur (3, 4).

4. Colonne à écoulement radial selon les revendications 2 et 3, dans laquelle la bague de douille supérieure (16) du tamis intérieur (3) est agencée à une distance axiale (35) de la bride de fixation (24).

5. Colonne à écoulement radial selon la revendication 3 ou 4, dans laquelle le corps de refoulement (9) est fixé de manière suspendue à une bride de couvercle (22) fermant le logement (2) vers le haut.

6. Colonne à écoulement radial selon la revendication 5, dans laquelle des trous borgnes filetés (30) formés côté frontal sur le corps de refoulement (9) sont vissés de l'extérieur avec la bride de couvercle (22).

7. Colonne à écoulement radial selon la revendication 5 ou 6, dans laquelle une fente axiale (31) est formé entre le corps de refoulement (9) et la bride de couvercle (22) pour faire passer le produit (10) entre au moins un raccord (28) agencé de manière centrale sur la bride de couvercle pour une conduite de produit externe et un espace intermédiaire radial extérieur (6) formé entre le tamis extérieur (4) et le logement (2) pour le produit.

8. Colonne à écoulement radial selon la revendication 7, dans laquelle la fente axiale (31) débouche sensiblement complètement dans l'espace radial extérieur (6).

9. Colonne à écoulement radial selon au moins l'une des revendications précédentes, dans laquelle le logement (2) et les tamis (3, 4) sont en acier inoxydable et le jeu axial autorisé (13) est supérieur à une dilatation longitudinale de l'acier inoxydable à une différence de température de 100°C, en particulier de 150°C.

10. Colonne à écoulement radial selon au moins l'une des revendications précédentes, dans laquelle les tamis intérieur et extérieur (3, 4) sont reliés de manière amovible au logement (2) au niveau de leurs deux zones d'extrémité frontales (3a, 3b, 4a, 4b).

11. Colonne à écoulement radial selon au moins l'une des revendications précédentes, dans laquelle les bagues d'étanchéité (14) présentent un profil de section transversale sensiblement en forme de L et/ou en forme de T.

12. Colonne à écoulement radial selon au moins l'une des revendications précédentes, dans laquelle les bagues d'étanchéité (14) sont en EPDM.

13. Colonne à écoulement radial selon au moins l'une des revendications précédentes, dans laquelle les bagues d'étanchéité (14), les sièges d'étanchéité associés (25, 26) et les surfaces d'étanchéité correspondantes (15) sont étanches aux liquides jusqu'à une pression de processus côté entrée d'au moins 10 bars.

14. Colonne à écoulement radial selon au moins l'une quelconque des revendications précédentes, dans laquelle l'espace (7) destiné à recevoir le matériau adsorbant (5) présente un volume de 0,02 à 2 m³, en particulier de 0,1 à 0,5 m³.
